# EUROPEAN PATENT SPECIFICATION

(11) **EP 4 210 899 B1**
(45) Date of publication and mention of the grant of the patent: **21.10.2026**
(21) Application number: 21867456.2
(22) Date of filing: 07.09.2021
(51) Int. Cl.: G05B 19/418, B25J 9/16

(54) **ASSEMBLY SEQUENCE GENERATION**
ERZEUGUNG EINER MONTAGESEQUENZ
GÉNÉRATION DE SÉQUENCE D'ASSEMBLAGE

(30) Priority: 08.09.2020 US 202063075738 P
(43) Date of publication of application: 19.07.2023
(73) Proprietor: Divergent Technologies, Inc., Los Angeles, California 90502 (US)
(72) Inventor: DERECICHEI, Aron, Los Angeles, California 90502 (US); CZINGER, Lukas, Los Angeles, California 90502 (US); SCANDALIATO, Angelo, Los Angeles, California 90502 (US); FRANCIA, Dominic, Los Angeles, California 90502 (US); MANSKE, Matt, Los Angeles, California 90502 (US)
(74) Representative: Mewburn Ellis LLP
(86) International application number: PCT/US2021/049318
(87) International publication number: WO 2022/055898

(56) References cited:
- EP-B1- 0 277 423
- US-A1- 2003 071 810
- US-A1- 2010 241 248
- US-B1- 6 185 477
- MOHAMMAD GIVEHCHI ET AL: "Evolutionary optimization of robotic assembly operation sequencing with collision-free paths", JOURNAL OF MANUFACTURING SYSTEMS, SOCIETY OF MANUFACTURING ENGINEERS, DEARBORN, MI, US, vol. 30, no. 4, 5 August 2011 (2011-08-05), pages 196 - 203, XP028319101, ISSN: 0278-6125, [retrieved on 20110811], DOI: 10.1016/J.JMSY.2011.08.003
- MARIAN ET AL: "A genetic algorithm for the optimisation of assembly sequences", COMPUTERS & INDUSTRIAL ENGINEERING, PERGAMON, AMSTERDAM, NL, vol. 50, no. 4, 1 August 2006 (2006-08-01), pages 503 - 527, XP005665760, ISSN: 0360-8352, DOI: 10.1016/J.CIE.2005.07.007
- MOSTAFA EMRANI NOUSHABADI ET AL: "A simulation optimization approach to un-paced assembly line balancing problem-II with additional reworking issue", MODELING, SIMULATION AND APPLIED OPTIMIZATION (ICMSAO), 2011 4TH INTERNATIONAL CONFERENCE ON, IEEE, 19 April 2011 (2011-04-19), pages 1 - 6, XP031876837, ISBN: 978-1-4577-0003-3, DOI: 10.1109/ICMSAO.2011.5775596
- LIHUI WANG ET AL: "Assembly process planning and its future in collaborative manufacturing: a review", THE INTERNATIONAL JOURNAL OF ADVANCED MANUFACTURING TECHNOLOGY, SPRINGER, BERLIN, DE, vol. 41, no. 1-2, 17 April 2008 (2008-04-17), pages 132 - 144, XP019700454, ISSN: 1433-3015
- DONG, T ET AL. ET AL.: "A knowledge-based approach to assembly sequence planning", THE INTERNATIONAL JOURNAL OF ADVANCED MANUFACTURING TECHNOLOGY, vol. 32, 2007, London, pages 1232 - 1244, XP019511290, Retrieved from the Internet <URL:http://give.zju.edu.cn/en/memberlntro/paper/KnowledgeAssembly.pdf> [retrieved on 20211029]

## Description

### CROSS REFERENCE TO RELATED APPLICATION(S)

This application claims the benefit of U.S. Provisional Application. No. 63/075,738, entitled "ASSEMBLY SEQUENCE GENERATION" and filed on September 08, 2020.

### BACKGROUND

### Field

The present disclosure relates generally to robotic systems and methods; and, more particularly, to one or more techniques for determining an assembly sequence for parts to be assembled in a robotic cell containing one or more robots.

### Introduction

A vehicle such as an automobile, truck or aircraft is made of a large number of individual structural components joined together to form the body, frame, interior and exterior surfaces, etc. These structural components provide form to the automobile, truck, and aircraft, and respond appropriately to the many different types of forces that are generated or that result from various actions like accelerating and braking. These structural components also provide support. Structural components of varying sizes and geometries may be integrated in a vehicle, for example, to provide an interface between panels, extrusions, and/or other structures. Thus, structural components are an integral part of vehicles.

Most structural components must be joined with another part, such as another structural component, in secure, well-designed ways. Modern automobile factories rely heavily on robotic assembly of structural components. However, robotic assembly of automobile components typically requires the use of fixtures. In conventional automobile factories, for example, each part of the automobile that will be robotically assembled typically requires a unique fixture that is specific to that part. Given the large number of individual parts in an automobile that are robotically assembled, an equally large number of fixtures are typically required. In fact, a modern automobile chassis can consist of thousands of assembled parts, each part typically requiring a specially designed fixture for assembly. However, fixtures can be extremely expensive. In fact, it is not unusual for a single fixture for an automobile part to cost $300,000 to $500,000. The cost of the fixtures used in an automobile factory is a large portion of the cost of the entire factory. As a result, building a modern automobile factory requires a massive capital investment, making it necessary to build and sell hundreds of thousands of cars just to recapture the initial investment and break even, let alone make a profit.

In addition to their enormous cost, fixtures can typically only be used for the specific part for which they are designed. Therefore, if a part is changed in some way, for example, if the car model's design is updated, an entirely new fixture must be designed and built. This adds significant cost and time to the process of changing or updating car models. As a result, automobiles models are updated only infrequently, for example, every five or six years or more. In addition, the cost and inflexibility of fixtures has caused the automobile industry to look towards using common structures across different vehicle models, such as using the same subframe for a car model and an SUV model. However, this commonality can severely limit the design of each vehicle forced to share the structure. As a result, vehicles on the road begin to look more and more the same, and consumers are left with fewer distinct choices.

Givehchi et al. "Evolutionary optimization of robotic assembly operation sequencing with collision-free paths", Journal of Manufacturing Systems, (2011) describes a toolset with integration of evolutionary optimization and a commercial virtual manufacturing environment that takes advantage of the collision avoidant segment path planning functionality of the virtual manufacturing tool and integrates it with the sequence optimizer.

Marian et al. "A genetic algorithm for the optimization of assembly sequences", Computers & Industrial Engineering, (2006) describes a genetic algorithm designed to optimize the assembly sequence planning problem.

Noushabadi et al. "A simulation optimization approach to un-paced assembly line balancing problem-II with additional reworking issue", 4th International Conference on Modeling, Simulation and Applied Optimization, (2011) describes the problem of the assembly line balancing problem and describes the simple assembly line balancing problem type 2 under the conditions of stochastic processing time of tasks and the element of reworking system.

Wang et al. "Assembly process planning and its future in collaborative manufacturing: a review, The International Journal of Advanced Manufacturing Technology, (2009) describes several approaches using different techniques and methodologies that have been developed and reported for assembly process planning.

Dong et al. "A knowledge-based approach to assembly sequence planning" The International Journal of Advanced Manufacturing Technology, (2006) describes a knowledge-based approach to the assembly sequence planning problem in a way that considers both geometric information and non-geometric knowledge.

### SUMMARY

The invention is set out in the appended set of claims.

Several aspects of robotic systems, methods, and apparatuses will be described more fully hereinafter.

### BRIEF DESCRIPTION OF THE DRAWINGS

Various aspects of the concepts described herein will now be presented in the detailed description by way of example, and not by way of limitation, in the accompanying drawings, wherein:
FIG. 1 illustrates an example processing system in which one or more techniques described herein may be employed.
FIG. 2 illustrates an example algorithm that may be performed by an assembly sequence generator, simulator, and simulation performance information processor in accordance with one or more techniques of this disclosure.
FIGS. 3A-B illustrate an example algorithm in accordance with one or more techniques of this disclosure.
FIG. 4 illustrates an example method in accordance with the techniques disclosed herein.

### DETAILED DESCRIPTION

The detailed description set forth below in connection with the appended drawings is intended to provide a description of various exemplary embodiments of the concepts disclosed herein and is not intended to represent the only embodiments in which the disclosure may be practiced. The terms "example" and "exemplary" used in this disclosure mean "serving as an example, instance, or illustration," and should not necessarily be construed as preferred or advantageous over other embodiments presented in this disclosure. The detailed description includes specific details for the purpose of providing a thorough and complete disclosure that fully conveys the scope of the concepts to those skilled in the art. However, the disclosure may be practiced without these specific details. In some instances, well-known structures and components may be shown in block diagram form, or omitted entirely, in order to avoid obscuring the various concepts presented throughout this disclosure.

In contrast to conventional automobile manufacturing, fixtureless assembly eliminates or significantly reduces reliance on fixtures as part of a new approach to assembling vehicle structures and other multi-part structures. Such assembly operations may include joining two or more structures (e.g., additively manufactured structures such as nodes), parts, components, and the like. In joining multiple structures, at least a portion of a vehicle may be assembled. For example, joining multiple structures may result in assembly of at least a portion of a body, frame, chassis, panel, etc. of a vehicle. Advantageously, such assembly operations can be executed through controlling a set of robots to join structures without the use of fixtures. For example, a part may include a robot engagement feature as described herein that may reduce or eliminate the need for use of a fixture with respect to the part. Structures joined by the set of robots may be additively manufactured.

One or more techniques described herein may reduce development costs, reduce processing resources consumption (e.g., by selecting an assembly sequence according to one or more criteria, which may cause the processing system to stop, halt, pause, or prevent further generation of one or more assembly sequences associated with the plurality of parts for which the selected assembly sequence was generated, thereby saving processing resources resulting in increased computing efficiency), optimize assembly sequence generation (e.g., reducing the number of assembly sequences generated and simulated thereby saving processing resources resulting in increased computing efficiency), or any combination thereof.

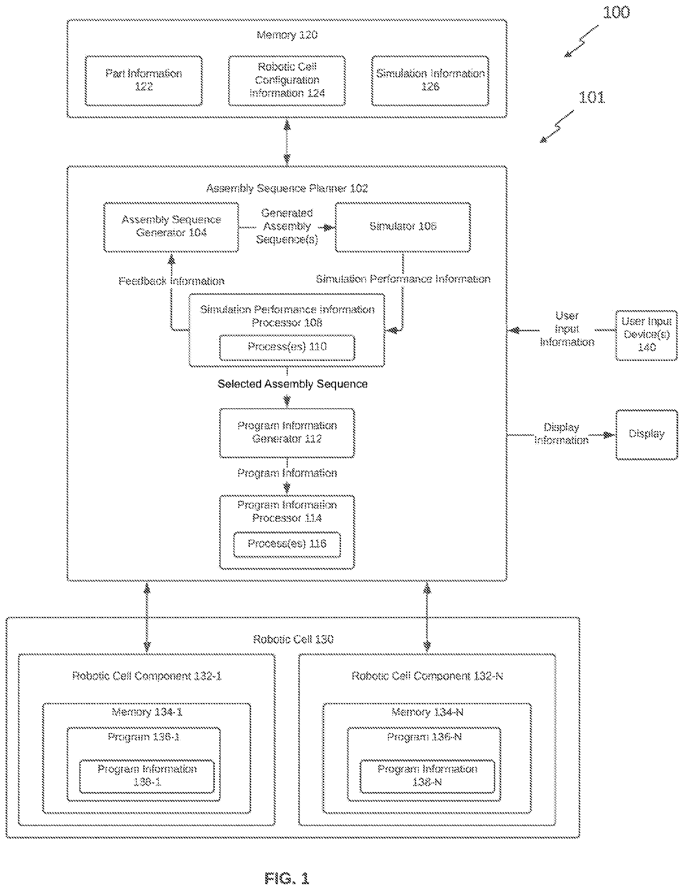

FIG. 1 illustrates an example assembly system 100, which may be a processing system as described herein, in which one or more techniques described herein may be employed. In some examples, the assembly system may include a processing system 101 and a robotic cell 130. Processing system 101 may include an assembly sequence planner 102 and a memory 120. Assembly system 100 may generate one or more assembly sequences for a plurality of parts, select one of the assembly sequences, and assemble the parts according to a selected assembly sequence. Each assembly sequence may define a respective order in which the plurality of parts is to be joined, combined, or assembled to form an assembly. For example, a first assembly sequence may define a first order in which the plurality of parts is to be joined to form an assembly, and a second assembly sequence may define a second order in which the plurality of parts is to be joined to form an assembly. The first order may be the same as or different from the second order. While the order may be the same or different across the first and second generated assembly sequences in this example, the first and second generated assembly sequences may still be different. For example, while the order may be the same, the parts may have different starting positions in robotic cell 130. As used herein, a part may refer to any physical structure that may be combined, joined, or assembled with (i) one or more other parts to form an assembly or (ii) a sub-assembly to form an assembly. An assembly may refer to a final assembly or a sub-assembly of the final assembly. A sub-assembly may be combined, joined, or assembled with another part to form an assembly, which may be a final assembly or another sub-assembly. Whether an assembly is a sub-assembly or a final assembly, both a sub-assembly and a final assembly include a plurality of previously unassembled parts that are combined, joined, or assembled to form the sub-assembly or the final assembly, respectively. A final assembly may refer to an assembly where all parts of a plurality of parts are joined, combined, or assembled together.

In the example shown in FIG. 1, assembly system 100 includes assembly sequence planner 102, memory 120, one or more user input devices 140, and robotic cell 130. The one or more user input devices 140 may include any user input device, such as a mouse, keyboard, touchscreen, smartphone, computer, or any other input device. Assembly sequence planner 102 may be communicatively coupled with one or more robotic cell components of robotic cell 130. Assembly sequence planner 102 may be communicatively coupled to memory 120 configured to store information. The information stored on memory 120 may include assembly parameters, such as part-specific information (e.g., part information 122) and robot-specific information (e.g., robotic cell configuration information 124 and simulation information 126).

Assembly sequence planner 102 may be communicatively coupled to the one or more user input devices 140, which may generate user input information in response to interaction by a user of assembly system 100. Assembly sequence planner 102 may receive user input information from the one or more user input devices 140. Assembly sequence planner 102 may store user input information received from the one or more user input devices 140 in memory 120. Part information 122, robotic cell configuration information 124, simulation information 126, or any combination thereof may include user input information. Assembly sequence planner 102 may obtain information stored on memory 120, including, for example, part information 122, robotic cell configuration information 124, and simulation information 126.

Robotic cell 130 may include one or more robotic cell components of robotic cell 130, which are depicted as robotic cell components 132-1 through 132-N, where N is an integer greater than or equal to 1 and represents the Nth robotic cell component of robotic cell 130 in examples where robotic cell 130 includes more than one robotic cell component. A robotic cell component can be, for example, a robotic arm, an automated guided vehicle (AGV), a motorized slide for moving a robot (e.g., linear translation), a part table, a computer processor, etc. For example, the one or more components of robotic cell 130 may include one or more robots and a processing system communicatively coupled to the one or more robots. A processing system of robotic cell 130 may provide information to the one or more robots and receive information from the one or more robots. Similarly, the one or more robots of robotic cell 130 may provide information to the processing system and receive information from the processing system. The information communicated between the one or more robots and the processing system of robotic cell 130 may include, for example, robot position information, robot movement information, robot state information, PLC state information, robot control information, or robot program run information. In some examples, a processing system of robotic cell 130 may be a programmable logic controller (PLC).

Robotic cell 130 may include more than one processing system. For example, robotic cell 130 may include a first processing system corresponding to a first robotic cell component and a second processing system corresponding to a second robotic cell component. The first processing system may be a PLC and the second processing system may be a metrology system configured to measure various information regarding one or more robots of robotic cell 130. In some examples, the processing systems may provide and receive information between each other. For example, the first processing system may provide information to the second processing system and receive information from the second processing system. Similarly, the second processing system may provide information to the first processing system and receive information from the first processing system. The information communicated between processing systems of robotic cell 130 may include, for example, robot position information, robot movement information, robot state information, PLC state information, robot control information, or robot program run information. Information described as being provided, transmitted, obtained, received, or the like may be communicated in accordance with one or more communication protocols. For example, obtaining information from a memory may be accomplished by issuing an instruction compliant with a communication protocol with which the memory is configured to comply. As another example, information communicated between robotic cell components may utilize one or more communication protocols, which may depend on whether any intermediary components reside between the robotic cell component providing information and the robotic cell component destined to receive the information.

Each robotic cell component of robotic cell 130 may include a memory and a program stored on the memory that, when executed by a component of the robotic cell component, causes the cell component to perform one or more functions. For example, robotic cell component 132-1 may include a memory 134-1 with program 136-1 stored thereon, and robotic cell component 132-N may include a memory 134-N with program 136-N stored thereon. In an example where robotic cell component 132-1 is a robot and robotic cell component 132-2 (i.e., an example of a robotic cell component where N>O) is a processing system, the program 136-1 may be a robot program and the program 136-2 may be a processing system program, such as a PLC program in an example where the processing system is a PLC.

Assembly sequence planner 102 may cause program information generated by assembly sequence planner 102 to be imported into a program stored on a memory of a robotic cell component of the one or more robotic cell components of robotic cell 130. For example, assembly sequence planner 102 may generate program information 138-1 and cause program information 138-1 to be imported into the program 136-1. Similarly, assembly sequence planner 102 may generate program information 138-N and cause program information 138-1 to be imported into the program 136-N. To cause program information to be imported into a program, assembly sequence planner 102 may provide the program information to the robotic cell component that is configured to run the program with which the program information is associated. The robotic cell component may receive the program information and import the received program information into the program. In some examples, the importation of program information into a program may refer to storing the program information on a memory accessible by the robotic cell component which is configured to run the program. In other examples, the importation of program information into a program may refer to modifying the program to include the program information.

In some examples, assembly parameters, such as part information 122, may include part information that relates to the plurality of parts. Part information may include geometry information for each part of the plurality of parts. Geometry information may include three-dimensional information regarding the part. For example, geometry information may include length, width, and height information, CAD information, etc. As another example, geometry information may include three-dimensional contour information regarding the part. As another example, geometry information can include three-dimensional information that represents the part in three-dimensional space. Assembly sequence planner 102 may derive geometry information from a three-dimensional model of any part that is defined in a three-dimensional rendering program file. In such an example, the three-dimensional rendering program file may include a three-dimensional model for one or more parts of a plurality of parts. The three-dimensional rendering program file may be stored in memory 120. In some examples, the assembly sequence planner may receive the three-dimensional rendering program file from the one or more user input devices 140 and store the three-dimensional rendering program file in memory 120.

Geometry information may include joint information for each respective part of the plurality of parts. Joint information may include the number of joints that each part of the plurality of parts includes. As used herein, a joint may refer to a join or assembly location of a part to which another part or a sub-assembly may be joined. The join or assembly location may be any structural feature of the part. Joint information may include the location of each joint of each part. For example, the location of a joint may identify where on the part the joint is positioned. The location of a joint may, for example, be identified relative to an engagement feature, such as a quick connect (QC) feature. Joint information may specify, for example, a relative position and orientation of a joint location relative to an engagement feature. Joint information may identify the type of joint for each joint of each part. For example, the type of joint may be a surface, a protrusion, or any other structural feature that is combined or joined with another structural feature of a sub-assembly or a part.

Geometry information may include robot engagement feature information for each respective part of the plurality of parts. Robot engagement feature information may include the number of robot engagement features that each part of the plurality of parts includes. As used herein, a robot engagement feature may refer to any structural feature of the part that is configured to be engaged by one or more robots. For example, a robot engagement feature may refer to a structural feature that is configured to enable a robot to grab, hold, pick-up, move, or manipulate the part via engagement with the structural feature. As another example, a robot engagement feature may refer to a structural feature that enables a robot to apply adhesive to the part via the structural feature. Robot engagement feature information may include the location of each robot engagement feature of each part. For example, the location of a robot engagement feature may identify where on the part the robot engagement feature is positioned. Robot engagement feature information may identify the type of robot engagement feature for each robot engagement feature of each part. For example, the type of robot engagement feature may be a surface, a protrusion, an additively manufactured structural feature (e.g., a three-dimensional printed structural feature), a QC feature, or any other structural feature that is configured to be engaged by one or more robots.

Part information may include sub-assembly information the plurality of parts. Sub-assembly information may identify one or more sub-assemblies and the parts associated with such one or more sub-assemblies. A sub-assembly may be an assembly of a number of parts that is less than the plurality of parts. In some examples, a sub-assembly may be an assembly required to be assembled from the plurality of parts. In such examples, the sub-assembly may include a joint, a robot engagement feature, or any other structural feature that may be used during the assembly process of the plurality of parts to achieve or build the final assembly. Sub-assembly information may include geometry information, such as joint information and robot engagement feature information, for a sub-assembly.

In some examples, assembly parameters, such as robotic cell configuration information 124, may include part delivery information that relates to how the parts are delivered to the robotic cell. For example, part delivery information can include information of a plurality of part delivery structures on which one or more parts may be positioned before assembly with another part or a sub-assembly. For example, a part delivery structure may be a table on which a part may be positioned prior to being engaged, such as picked up, by a robot for assembly with another part or a sub-assembly. Part delivery information may include robotic cell location information for each respective part delivery structure relative to robotic cell 130 that identifies where, relative to robotic cell 130, each respective part delivery structure is located. For example, one or more part delivery structures may be positioned within robotic cell 130, on the perimeter of robotic cell 130, outside of robotic cell 130, or any combination thereof. Part delivery information may include a part delivery structure identifier for each respective part that identifies which respective part delivery structure each respective part is to be positioned on before assembly. Part delivery information may include part location information and/or orientation information for each respective part that identifies where each respective part is to be positioned and/or oriented on a respective part delivery structure before assembly. Part delivery information may identify the type of part delivery structure. For example, a part delivery structure may be a table, a bin, a wall, a conveyor belt, an AGV, or any other structure on which one or more parts may be located before assembly.

In some examples, assembly parameters, such as robotic cell configuration information 124, may include information that identifies the number of robotic cell components, such as the number of robots, in robotic cell 130. The robotic cell configuration information 124 may include information that identifies the location of robotic cell components, such as the locations of robots in a robotic cell layout, in robotic cell 130. The robotic cell configuration information 124 may include information that identifies the location of robotic cell components, such as the locations of robots in a robotic cell layout and locations at which any part delivery structures access the robotic cell, in robotic cell 130.

In some examples, assembly parameters, such as simulation information 126, may include information that enables simulation of robotic cell 130. For example, the simulation information 126 may include one or more robot cell simulation parameters and/or rules corresponding to robotic cell 130 that enable simulator 106 to simulate assembling a plurality of parts in robotic cell 130 in accordance with an assembly sequence generated by assembly sequence generator 104. Robotic cell simulation parameters may include, for example, robot speeds, robot power usages, robot accuracies, robot reach, part delivery structure speeds, etc.

Assembly sequence planner 102 may include assembly sequence generator 104, which may generate one or more assembly sequences for a plurality of parts. Assembly sequence generator 104 may generate the one or more assembly sequences based on part information 122. For example, the assembly sequence generator may be configured to receive part information 122, such as from memory 120.

Assembly sequence generator 104 may assign information to each part of the plurality of parts, such that an assembly sequence includes mapped information, such as a data structure, that maps each part in the assembly sequence to information, where such information may include any part information 122. For example, a plurality of parts may include a first part, a second part, and a third part. In a first example, assembly sequence generator 104 may assign part information 122 to each of the first, second, and third parts in a first assembly sequence. In this first example, the first assembly sequence may define the order of assembly as the first part is to be assembled with the second part and then the third part is to be assembled with the second part, which is already assembled with the first part. The generated first assembly sequence may include first part delivery information assigned to the first part, second part delivery information assigned to the second part, and third part delivery information assigned to the third part. However, in a second example including the same plurality of parts as the first example, assembly sequence generator 104 can assign part information 122 to each of the first, second, and third parts in a second assembly sequence. In this second example, the second assembly sequence may define the order of assembly as the second part is to be assembled with the third part and then the first part is to be assembled with the second part, which is already assembled with the third part. The generated second assembly sequence may include the first part delivery information assigned to the first part, the second part delivery information assigned to the second part, and the third part delivery information assigned to the third part. In these two examples, the first, second, and third part delivery information may, for example, be a first, second, and third part delivery structure identifier, respectively.

As another example, an assembly sequence generated by assembly sequence generator 104 may include part delivery location information assigned to each part of the plurality of parts within the assembly sequence. For example, in generating the one or more assembly sequences for the plurality of parts based on the assembly parameters, assembly sequence generator 104 may assign respective part delivery location information to each respective part of the plurality of parts for each respective assembly sequence of the one or more assembly sequences.

In some examples, assembly sequence generator 104 may generate one or more assembly sequences by using a computer program(s). For example, the assembly sequence generator may generate one or more assembly sequences by executing computer code on the assembly parameters. As an example, one or more assembly sequences may be generated by applying a first computer code to the assembly parameters, and one or more assembly sequences may be generated by applying a second computer code to the assembly parameters. The first and second computer codes may be different. For example, the first computer code may use a genetic method and the second computer code may use a mixed integer linear program (MILP). Other example methods could include satisfiability methods (such as satisfiability modulo theories (SMT)). As another example, the first and second computer codes may use different genetic methods. In another example, the first and second computer codes can be any combination of the methods above. In various embodiments, these methods may be used in simulator 106 and/or simulation performance information processor as well.

Example Genetic Method: Genetic algorithms (GAs) are an optimization methodology that may be employed or otherwise performed by assembly sequence planner 102, such as by assembly sequence generator 104. GAs are a subset of evolutionary algorithms. In GA terminology, a population is the group of candidates (chromosomes) at any given iteration, a chromosome is a set of design variables (genes) which make up the search space, and a gene is a design variable which is attempted to be optimized. A generation is each new population in this iterative process. The design variables are encoded into a suitable format for the GA operators, such as a flat one-dimensional array of genes or a two-dimensional array of genes. The population of chromosomes evolves via mating of elite (best scored) parents via crossover and mutation operators. The GA performance may be enhanced by utilizing different types of mutation and crossover operators to define various search characteristics.

In order to reduce the time it takes to find a local optima and/or global optima candidate solutions, meta-heuristic knowledge may be built into the GA to reduce the search space. The part delivery structures and parts encoded in the assignments may not be independent. The search space may be reduced by exploiting some problem specific knowledge for positioning parts on the tables.

Part Delivery Structure Adjacency: In some examples, part delivery structures may be considered adjacent if they are within one or two shared handlers reach from each other. This may be a reasonable definition since parts from any two part delivery structures must be joined by at least two handlers. A handler may refer to a robot.

Sub-assembly Tree: In some examples, sub-assemblies group parts that should enter the system on adjacent part delivery structures. The leaf sub-assemblies may be particularly useful since they contain the parts.

Part Joints: May define which parts are connected to each other. This information may be partially redundant with the sub-assembly tree since all parts in a sub-assembly may be connected.

How this information is used in the GA operators is described below.

Example Chromosome Constructor: New chromosomes may be first initialized with empty part delivery structures. Then each leaf sub-assembly may be randomly selected and its parts may be randomly placed on random part delivery structures. Part delivery structure adjacency may be utilized by placing the next part on a part delivery structure adjacent to the previously placed part. This procedure may result in grouping sub-assemblies into compact part delivery structure neighborhoods in the cell.

Example Mutation Operators: Mutation operators may select a chromosome from the current generation, and may alter the chromosome by rearranging some of its genes. Mutation operators may add new chromosomes to the population. Mutation operators may leave the original chromosome unchanged and create a new one with the alterations.

Example Two Part Swap: Two random parts may be selected from a chromosome and swap positions.

Example Two Part Delivery Structure Swap: Two random part delivery structures may be selected from a chromosome and swap parts.

Example All Part Delivery Structure Swap: All part delivery structures from a chromosome may be randomly selected and swap parts.

Example Crossover (Mating) Operators: Crossover operators may select two chromosomes (parents) from the current generation, and may create new chromosomes (children or offspring) by interchanging genes between the parents.

Example Multipoint (Random Parts): The same set of random parts may be selected and relocated cross the parent chromosomes.

Example Multipoint (Non-homologous Parts): Homologous genes may be parts that appear in the same position (part delivery structure and part index) in both parents. This crossover operator may find all non-homologous genes between two parents, and may relocate them to create two new children chromosomes. Since early generations (e.g., early generations of assembly sequences) may be more diverse and therefore have more non-homologous genes, this operator may broaden the search range by relocating a larger set of genes. In later generations (e.g., later generations of assembly sequences), as chromosomes start to converge, the number of non-homologous genes reduce, and this operator then helps speed up convergence. The non-homologous genes may be randomly placed at the end of tables.

Example Horizontal Split with Repair: A random position (part delivery structure and part index) may be selected, and two parent chromosomes may be split and crossed over by swapping part delivery structures above and below the position. This may create two children chromosomes. Since the crossover can result in missing or duplicate parts, a repair step may be performed to fix invalid chromosomes.

Example Vertical Split with Repair: A random position (part delivery structure and part index) may be selected, and two parent chromosomes may be split and crossed over by swapping parts from the left and right of the position. This may create two children chromosomes. Since the crossover can result in missing or duplicate parts, a repair step may be performed to fix invalid chromosomes.

Referring back to FIG. 1, for each assembly simulation of a generated assembly sequence, simulator 106 may generate simulation performance information. The simulator performance information may be associated with the configuration of robotic cell 130, which may be defined by the robotic cell configuration information 124. The simulator performance information may include robot resource allocation, robot utilization information, task scheduling and cycle time information, assembly accuracy information, etc., corresponding to the simulated sequence and performance of the one or more robots in robotic cell 130 during the simulated assembly of the plurality of parts in accordance with a generated assembly sequence. In some examples, robot utilization information may identify how many of the robots among the plurality of robots of the simulated robotic cell are utilized by the generated assembly sequence. For example, the number of robots may be the number robots used during the simulation performed by simulator 106 for a particular assembly sequence. In some examples, cycle time information may identify a cycle time corresponding to the robotic cell simulated for the generated assembly sequence. For example, the cycle time may be the cycle time of the simulation performed by simulator 106 for a particular assembly sequence. In some examples, the simulator performance information may include assembly accuracy information. For example, simulator 106 can determine (e.g., predict) a dimensional accuracy of the final assembly for a particular assembly sequence. Dimensional accuracy may include, for example, predicted length and/or rotation measurements of the assembly that may be different than the desired lengths and/or rotations. For example, simulator 106 may determine that, if the assembly is assembled according to a particular assembly sequence, the length of assembly in a particular direction (e.g., an x-direction) may be up to 1mm too long or short. Similarly, simulator 106 may determine that one end of the assembly may be rotated up to 2 degrees from the desired orientation.

Simulator 106 may provide the simulated assembly sequences (i.e., assembly sequences that have undergone simulation by simulator 106) and simulator performance information generated for each simulated assembly sequence to the simulation performance information processor 108. The simulation performance information processor 108 may perform one or more processes 110 on the simulation performance information generated by simulator 106. For example, the one or more processes 110 may include storing simulation performance information in memory 120. As another example, the one or more processes 110 may include enabling user interaction with simulation performance information. To enable user interaction with simulation performance information, the simulation performance information processor 108 may cause simulation performance information to be displayed on a display of assembly system 100. As another example, the one or more processes 110 may include determining whether a simulated assembly sequence is valid or should be discarded. In such an example, the simulation performance information processor 108 may make such a determination based on the simulation performance information corresponding to a simulated assembly sequence. For example, the simulation performance information processor 108 may compare simulation performance information with one or more validity criteria. In some examples, in the event of at least one validity criterion of the one or more validity criteria not being satisfied, the simulation performance information processor 108 may discard the assembly sequence.

The validity criteria may include checking the simulation performance information for simulation complete information, which may indicate either that the assembly sequence can be completed by robotic cell 130 or cannot be completed by robotic cell 130. If the simulation performance information processor 108 determines that the assembly sequence with which the simulation performance information is associated cannot be completed by robotic cell 130, then the simulation performance information processor 108 may discard the assembly sequence. If the simulation performance information processor 108 determines that the assembly sequence with which the simulation performance information is associated can be completed by robotic cell 130, then the simulation performance information processor 108 may accept the assembly sequence.

The validity criteria may include a threshold number of robots criterion, such as a maximum number or a minimum number of robots used during the simulation to assemble the parts in accordance with the assembly sequence. In this example, the simulation performance information processor 108 may discard or accept the assembly sequence based on whether this validity criterion is satisfied based on the robot utilization information of the simulation performance information. For example, the simulation performance information processor 108 may compare the threshold number of robots criterion to robot utilization information to determine whether an assembly sequence should be accepted or discarded. An assembly sequence may be discarded if the threshold number of robots criterion is not satisfied, and may be accepted if the threshold number of robots criterion is satisfied.

The validity criteria may include a cycle time criterion. The cycle time criterion may be a minimum cycle time criterion or a maximum cycle time criterion. In this example, the simulation performance information processor 108 may discard or accept the assembly sequence based on whether this validity criterion is satisfied based on the cycle time information of the simulation performance information. For example, the simulation performance information processor 108 may compare the cycle time criterion to cycle time information to determine whether an assembly sequence should be accepted or discarded. An assembly sequence may be discarded or accepted based on whether the simulation cycle time for the simulated assembly sequence satisfies or does not satisfy the cycle time criterion. In some examples, the cycle time criterion may include the cycle time of the simulation performance information being less than the cycle time criterion, less than or equal to the cycle time criterion, equal to the cycle time criterion, greater than the cycle time criterion, or greater than or equal to the cycle time criterion.

The validity criteria may include an assembly accuracy criterion. The assembly accuracy criterion may be, for example, a minimum assembly accuracy criterion, such as a maximum acceptable dimensional deviation from nominal dimensions of the assembly. In various embodiments, the minimum assembly accuracy criterion may be on the order of millimeters or microns. In this example, the simulation performance information processor 108 may discard or accept the assembly sequence based on whether this validity criterion is satisfied based on the assembly accuracy information of the simulation performance information. For example, the simulation performance information processor 108 may compare the assembly accuracy criterion to assembly accuracy information to determine whether an assembly sequence should be accepted or discarded. An assembly sequence may be discarded or accepted based on whether the simulation assembly accuracy for the simulated assembly sequence satisfies or does not satisfy the assembly accuracy criterion. In some examples, the assembly accuracy criterion may include the assembly accuracy of the simulation performance information being less than the assembly accuracy criterion, less than or equal to the assembly accuracy criterion, equal to the assembly accuracy criterion, greater than the assembly accuracy criterion, or greater than or equal to the assembly accuracy criterion.

Example Objective Function For Generation of Candidate Fitness Score: Each candidate solution may be run through the sequence simulator. Based on the results of the simulation, an objective function may be used to calculate a scalar valued fitness score. Information generated by the simulator may be input into the objective function to generate the score. This score may be used to rank the candidates. The objective function may be formulated to indicate optimal performance when minimized. The number of parts on a particular robot may indicate assembly sequence completeness. The number of closed joints may indicate the progress of the assembly sequence simulation. The average robot utilization may indicate full usage of the robotic cell with minimal idle time.

In the event the simulation performance information processor 108 determines to discard an assembly sequence, the simulation performance information processor 108 may provide feedback information to assembly sequence generator 104. The feedback information may include the discarded assembly sequence and the simulation performance information associated therewith. In the event the simulation performance information processor 108 determines that an assembly sequence is valid, the simulation performance information processor 108 may provide feedback information to assembly sequence generator 104. The feedback information may include the accepted assembly sequence and the simulation performance information associated therewith. Assembly sequence generator 104 may adjust generation of subsequent assembly sequences based on feedback information received from the simulation performance information processor 108. For example, based on feedback information, assembly sequence generator 104 may adjust, modify, or change one or more methods applied to the assembly parameters, such as part information 122, robotic cell configuration information 124, and simulation information 126. As another example, based on feedback information, assembly sequence generator 104 may prevent inclusion of any sequence in any subsequently generated assembly sequences, such as a sequence associated with a sub-assembly, that satisfies one or more criterion, such as the sequence being unable to be completed during simulation of a previously generated assembly sequence, or the sequence took too long to complete during simulation of a previously generated assembly sequence. As another example, based on feedback information, assembly sequence generator 104 may target inclusion in any subsequently generated assembly sequences of any sequence, such as a sequence associated with a sub-assembly, that was determined by the simulation performance information processor 108 as having an associated cycle time and/or assembly accuracy that satisfied an optimized criterion.

As another example, the one or more processes 110 may include determining a score for assembly sequences based on simulation performance information. For example, the simulation performance information processor 108 may receive a first assembly sequence and first simulation performance information associated therewith and a second assembly and second simulation performance information associated therewith from simulator 106. The simulation performance information processor 108 may determine a first score for the first assembly sequence based on the first simulation performance information, and a second score for the second assembly sequence based on the second simulation performance information.

As another example, the one or more processes 110 may include selecting an assembly sequence based on selection information. Selection information may include at least one selection criterion relative to one or more scores. The one or more scores may include a comparison score or one or more generated scores respectively corresponding to different assembly sequences. The comparison score may be a numerical value. The comparison score may be a score different from any score generated or otherwise determined by the simulation performance information processor 108. The comparison score may be a default value or a user input value, either of which may constitute a threshold value. The comparison score may be user input information stored in memory 120, which a user may have input into assembly system 100 by interacting with the one or more user input devices 140. A score generated for an assembly sequence based on simulation performance information may be a numerical value.

In some examples, the simulation performance information processor 108 may compare a score of an assembly sequence with the comparison score. The simulation performance information processor 108 may select the assembly sequence based on the comparison of the score of the assembly sequence to the comparison score. For example, the simulation performance information processor 108 may determine whether a score of an assembly sequence satisfies selection information, such as at least one selection criterion relative to the comparison score. In some examples, the at least one selection criterion may include the score of an assembly sequence being less than the comparison score, less than or equal to the comparison score, equal to the comparison score, greater than the comparison score, or greater than or equal to the comparison score. The simulation performance information processor 108 may select the assembly sequence based on the determination that the score of the assembly sequence satisfies the selection information, such as at least one selection criterion relative to the comparison score.

The simulation performance information processor 108 may generate a respective score for each respective assembly sequence among a plurality of assembly sequences. In some examples, the simulation performance information processor 108 may compare the scores generated for the plurality of assembly sequences to determine which score satisfies selection information. In some examples, the selection information may include at least one selection criterion that includes the highest score or the lowest score. The simulation performance information processor 108 may select the assembly sequence based on the determination that the score of the assembly sequence satisfies the selection information, such as the assembly sequence that has the highest score or the lowest score among the scores generated for the plurality of assembly sequences.

As another example, the one or more processes 110 may include selecting an assembly sequence based on the simulation performance information corresponding to the assembly sequence. In such an example, the simulation performance information processor 108 may compare the simulation performance information corresponding to various assembly sequences to selection information, which may include at least one selection criterion. The simulation performance information processor 108 may select the assembly sequence based on the comparison of the simulation performance information corresponding to the assembly sequence with the selection information. In some examples, the at least one selection criterion may include a selection cycle time and/or assembly accuracy. In this example, the simulation performance information processor 108 may select an assembly sequence if the cycle time and/or assembly accuracy set forth in the cycle time and/or assembly accuracy information corresponding to the assembly sequence satisfies the selection cycle time and/or assembly accuracy, such as being less than the selection cycle time and/or being greater than the selection assembly accuracy.

The program information generator 112 may generate program information for one or more assembly sequences. The one or more assembly sequences may include one or more selected assembly sequences. The program information may include program information for one or more programs. For example, the program information generator 112 may generate program information for a processing system program for a processing system of robotic cell 130 and respective program information for each respective robot utilized by simulator 106 during simulation of the assembly sequence for which the program information is being generated. For example, program information may include off-line programs (OLPs) for robots in the cell, process task dependencies for the programable logic controller (PLC) of the robots, etc.

The program information processor 114 may perform one or more processes 116 on the program information generated by the program information generator 112. For example, the one or more processes 116 may include storing program information in memory 120. As another example, the one or more processes 116 may include enabling user interaction with program information, such as enabling the user to modify program information. Modification of program information may include adding information to generated program information. To enable user interaction with program information, the program information processor 114 may cause program information to be displayed on a display of assembly system 100. As another example, the one or more processes 116 may include causing program information to be imported into a program stored on a memory of a robotic cell component of the one or more robotic cell components of robotic cell 130. To cause program information to be imported into a program, the program information processor 114 may provide the program information to the robotic cell component that is configured to run the program with which the program information is associated. The robotic cell component of robotic cell 130 may receive the program information and import the received program information into the program.

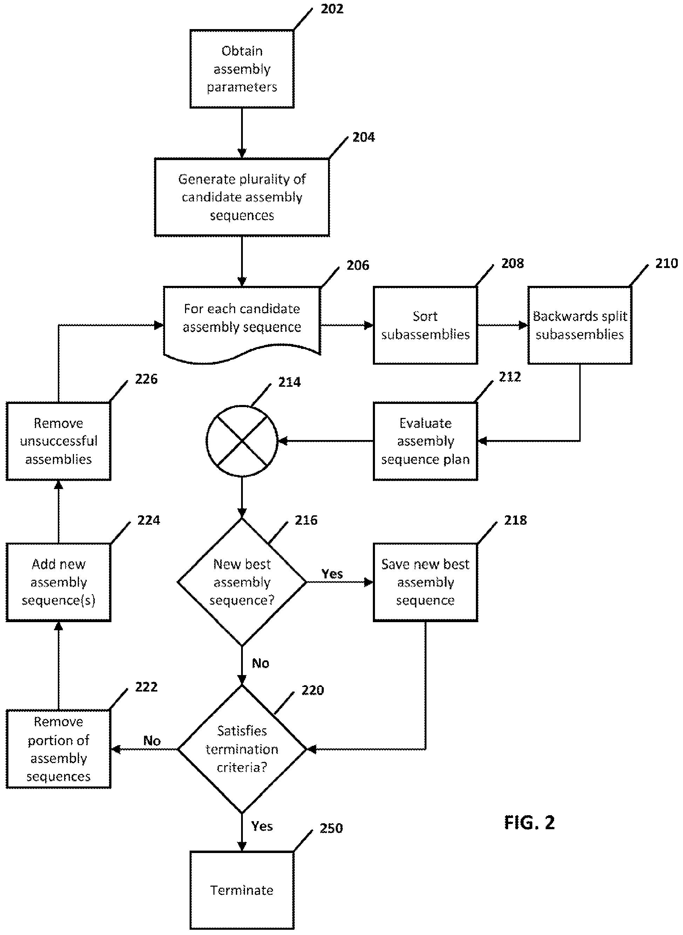

FIG. 2 illustrates an example of a method that assembly sequence generator 104, simulator 106, and simulation performance information processor 108 may use to generate one or more assembly sequences. Referring to FIG. 2, at block 202, assembly sequence generator 104 may obtain assembly parameters. In some examples, the assembly parameters may be received from memory 120. Some examples of assembly parameters can include part-specific information, such as part geometry in CAD or finite element mesh format, a partial or complete metadata file containing part-to-part joint information related to install information (e.g., the location of the joint on the part, the translation vector used to move the part towards its counterpart part during joining), bonding information relating to the bond used to join (e.g., cure time of an adhesive used to bond, welding locations), part handler information (e.g., gripper engagement feature information, compatible end effector geometry), part metrology landmark information (e.g., metrology feature locations), part machining surface information, part mass and center-of-gravity information, subassembly groupings (e.g., preferred subassembly orders), and/or part material information (e.g, part material composition (e.g., aluminum, plastic, composite)). Assembly parameters may include robot-specific information, such as robot model information (e.g., robot specifications including robot task timing parameters, robotic arm reach, robot connectivity information), robotic cell information (e.g., cell layout, metrology system information, AGV path information, part table specifications, robot end effector specifications and locations, PLC information). Assembly parameters may include sequence generation parameters, such as termination criteria, search policies, meta-heuristics, etc. At block 204, assembly sequence generator 104 may generate a plurality of candidate assembly sequences that defines an initial search set of candidate assembly sequences that enumerates a portion of a search space. At block 206, assembly sequence generator 104 may perform the processes described with respect to blocks 208, 210, 212, 214, 216, 218, 220, 222, 224, 226, and 250 for each candidate assembly sequence in the initial search set.

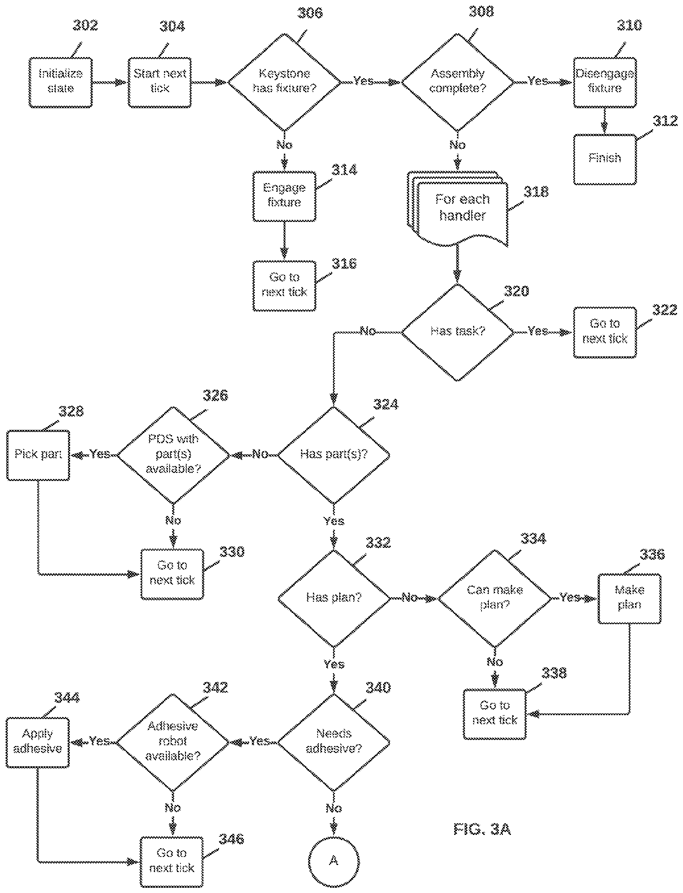

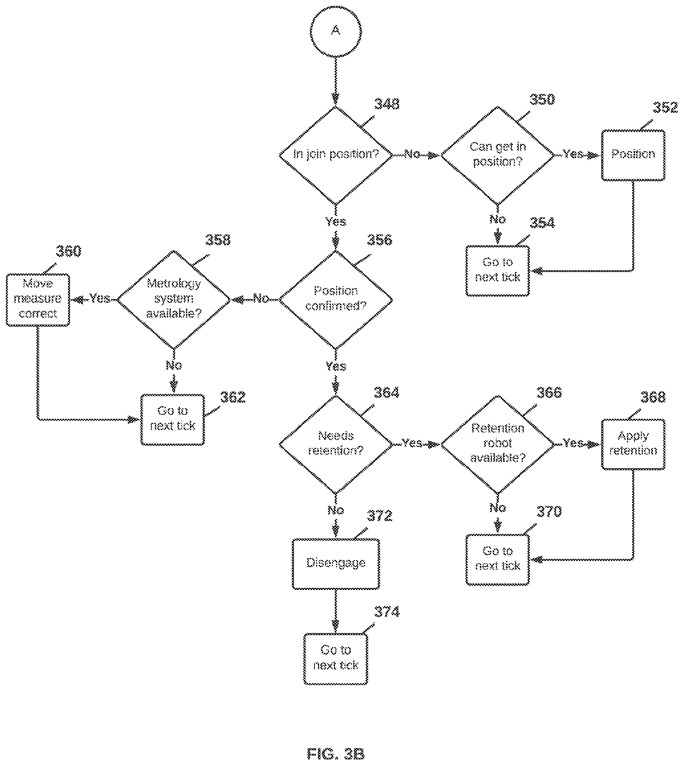

At block 208, assembly sequence generator 104 may sort sub-assemblies for the particular assembly sequence, e.g., determining possible subassembly scenarios and sorting by inherent order based on assembly join geometry. For example, various subassembly combinations may be sorted based on the metadata defining the parts' joints. For example, assembly sequence generator 104 may randomly sort remaining level 1 sub-assemblies (e.g., a group of parts that are associated with a particular robot in the cell) in reverse order starting from the sub-assembly on the automated guided vehicle (AGV). At block 210, assembly sequence generator 104 may backwards split the sub-assemblies for the particular assembly sequence. For example, assembly sequence generator 104 may backwards split (that is, simulate disassembly) the first level 1 sub-assembly over the robot graph onto the part delivery structures. At block 212, each candidate assembly sequence may be processed by simulator 106 to perform a simulation of each candidate to determine simulation performance information, such as resource allocation and task schedule information. For example, FIGS. 3A-B show an example method performed by simulator 106. The simulation performance information can be used be the remaining process as shown in the remainder of FIG. 2. At block 214, assembly sequence generator 104 may allows 208, 210, and 212 to be performed on all candidate assembly sequences from 206.

Blocks 216, 218, and 220 may be performed by the simulation performance information processor 108. At block 216, simulation performance information processor 108 may receive the simulation performance information of each candidate assembly sequence from block 214 and may determine, based on the information received from block 214, whether the particular assembly sequence is a new best assembly sequence, for example, by comparing the assembly sequence's simulation performance information with the validity criteria as described above with respect to FIG. 1. At block 218, simulation performance information processor 108 may save (e.g., store) the particular assembly sequence in memory 120 if it is determined at block 216 that the particular assembly sequence is the new best assembly sequence. From block 218, simulation performance information processor 108 may proceed to block 220. Simulation performance information processor 108 may proceed to block 220 if it is determined at block 216 that the particular assembly sequence is not the new best assembly sequence. At block 220, simulation performance information processor 108 may determine whether termination criteria is satisfied. Termination criteria may include, for example, exhaustion of all possible candidate assembly sequences, a time limit, a number of candidates limit, convergence criteria (e.g., an indication of no further improvement), etc. Simulation performance information processor 108 may proceed to block 250 if it is determined that the termination criteria is satisfied at block 220. At block 250 the simulation performance information processor 108 may output the best candidate assembly sequence, which was saved in block 218, as the selected assembly sequence and terminate the process. If the termination criteria is not satisfied at block 220, simulation performance information processor 108 may provide feedback to assembly sequence generator 104 as shown in blocks 222, 224, and 226.

At block 222, assembly sequence generator 104 may remove a portion of assembly sequences from the initial search set of candidate assembly sequences. In some examples, removal of a portion of assembly sequences may include removal of a portion of worst performing assembly sequences. At block 224, after removal of an assembly sequence at block 222, assembly sequence generator 104 may add one or more new assembly sequences to the plurality of assembly sequences that are to be analyzed in the method illustrated in FIG. 2. At block 226, assembly sequence generator 104 may remove unsuccessful sub-assemblies. In some examples, removal of unsuccessful sub-assemblies may include removing assembly sequences that fail to achieve successful assembly of the plurality of parts or fail to satisfy one or more different criterion. From block 226, assembly sequence generator 104 may proceed to block 206 and loop through the blocks described above in the same manner but for a different respective assembly sequence of the plurality of assembly sequences.

Example Architecture: An assembly sequence simulation may utilize an initial assignment of parts to part delivery structures, such as tables, for robots to pick-up and assemble through the robotic cell. As the number of parts increases, for a given number of tables, the number of permutations increase exponentially. This search space may consist of all infeasible and feasible solutions. In some examples, heuristic-based optimization may be implemented by assembly system 100 by generating many possible candidates (e.g., multiple assembly sequences for a particular plurality of parts) in the search space, evaluating each candidate's fitness score based on an objective function, and then using the candidates with the best score to generate new candidates. A candidate or candidate solution may refer to an assembly sequence generated for a plurality of parts, such as an assembly sequence generated by assembly sequence generator 104. Iterating in this fashion may drive the candidates to optimal solutions in the search space. Care may be taken to avoid premature convergence to local optima to find global optima. Therefore, any advances in performance may be amplified when running the optimization routine, which may be performed by assembly sequence planner 102. This includes, for example, sequence simulation execution time, dispatch and retrieval from storage, generation of new candidates in the search space, evaluation of fitness score for each candidate, or any combination thereof.

FIGS. 3A-B illustrate an example of a simulation method that simulator 106 may use to perform a simulation on a candidate assembly sequence based on the robotic cell configuration information 124 and simulation information 126. A keystone may refer to a robotic cell component of robotic cell 130, such as a robot. In some examples, keystone may refer to a centrally located robot relative to other robots in robotic cell 130, or a robot that interacts with or within reach of a plurality of other robots in robotic cell 130. In some embodiments, a keystone robot may be a robot that executes the final step in the assembly and passes the final assembly out of the robotic cell. In some embodiments, a keystone robot may utilize a fixture to hold the final assembly. While FIGS. 3A-B show the engagement and disengagement of a fixture, other examples may include engagement and disengagement of a robot engagement feature in addition to or in lieu of a fixture (that is, in some embodiments a fixture and/or a keystone robot might not be used). In this regard, blocks 306, 314, 316, and 310 may be optional. Handlers may refer to robots different from the keystone robot.

Referring to FIGS. 3A-B, at block 302, simulator 106 may initialize state. For example, an initial state may be robots of the cell in their initial poses, and the parts are not engaged by the robots. At block 304, simulator 106 may start the next tick. A tick refers to a time step in the simulation. In some embodiments, a tick may equal 1 second. In other embodiments, a tick may be a value less than 1 second. In alternate embodiments, a tick may be a value greater than 1 second. At block 306, simulator 106 may determine whether a keystone of the robotic cell in the simulation is engaged with a fixture. Simulator 106 may proceed to block 314 if it is determined that the keystone does not have a fixture. At block 314, simulator 106 may cause the keystone to engage a fixture as part of the simulation. From block 314, simulator 106 may proceed to block 316 where simulator 106 may go the next tick. Simulator 106 may proceed to block 308 if it is determined that the keystone has a fixture. At block 308, simulator 106 may determine whether the simulated assembly is complete. If the assembly held by the keystone is not complete, then the assembly held by the keystone may be referred to as a sub-assembly. Simulator 106 may to proceed to block 318 if it is determined that the simulated assembly is not complete. Simulator 106 may proceed to block 310 if it is determined that the simulated assembly is complete. At block 310, simulator 106 may cause the keystone to disengage the fixture as part of the simulation. From block 310, simulator 106 may proceed to block 312 where simulator may finish or otherwise end the simulation. During the example simulation method illustrated in FIGS. 3A-B, simulator 106 may generate simulation performance information.

At block 318, simulator 106 may perform the illustrated processes for each handler corresponding to the simulated robotic cell configuration. At block 320, simulator 106 may determine whether the particular handler has a particular task, e.g., moving to engage a part, engaging a part, moving a part, disengaging a part, holding a part for adhesive application, joining parts, or other task. Simulator 106 may proceed to block 322 if it is determined that the particular handler has a task. At block 322, simulator 106 may go to the next tick. Simulator 106 may proceed to block 324 if it is determined that the particular handler does not have a task. At block 324, simulator 106 may determine if the particular handler is engaging one or more parts. Simulator 106 may proceed to block 326 if it is determined that the particular handler is not engaged with one or more parts. Simulator 106 may proceed to block 332 if it is determined that the particular handler is engaged with one or more parts.

At block 326, simulator 106 may determine whether a part delivery structure (PDS) has one or more parts available for engagement by the particular handler. A PDS may include, e.g., a parts table on which parts are positioned for picking by robots, an AGV that delivers parts to robots, etc. In some examples, the part delivery structure may be assigned or associated with the particular handler. In some embodiments, at block 326 simulator 106 may determine if the handler needs to equip an end effector to engage (e.g., pick) the part, in which case the simulator may cause the handler to equip the appropriate end effector. Simulator 106 may proceed to block 328 if it is determined that the part delivery structure has one or more parts available. At block 328, simulator 106 may cause the particular handler to engage (e.g., pick-up) one or more parts as part of the simulation. Simulator 106 may proceed to block 330 from block 328. Simulator 106 may proceed to block 330 if it is determined that the part delivery structure does not have one or more parts available for engagement by the particular handler. At block 330, simulator 106 may go to the next tick.

At block 332, simulator 106 may determine whether the particular handler has a plan. For example, if the handler is engaging a part, the plan may include a coordination plan between the handler and another handler to join parts. Simulator 106 may proceed to block 340 if it is determined that the particular handler has a plan. Simulator 106 may proceed to block 334 if it is determined that the particular handler does not have a plan. At block 334, simulator 106 may determine whether the particular can make a plan. Simulator 106 may proceed block 336 if it is determined that the particular handler can make a plan. At block 336, simulator 106 may make (e.g., set) a plan. Simulator 106 may proceed to block 338 from block 336. At block 338, simulator 106 may go to the next tick.

At block 340, simulator 106 may determine whether the sub-assembly and/or the one or more parts engaged by the particular handler needs adhesive for assembly thereof. Simulator 106 may proceed to block 342 if it is determined that adhesive is needed. Simulator 106 may proceed to block 348 if it is determined that adhesive is not needed. At block 342, simulator 106 may determine whether an adhesive robot is available. In some examples, an adhesive robot may be a robot configured to apply adhesive to the one or more parts engaged by the particular handler and/or the sub-assembly. In some embodiments, at block 342 simulator 106 may determine if an adhesive robot needs to equip an adhesive applicator to apply adhesive, in which case the simulator may cause the adhesive robot to equip the appropriate applicator. Simulator 106 may proceed to block 344 if it is determined that an adhesive robot is available with the appropriate adhesive applicator. At block 344, simulator 106 may cause the adhesive robot to apply adhesive in the simulation, and then simulator 106 may proceed to block 346. Simulator 106 may proceed block 346 if it is determined that an adhesive robot is not available at block 342. At block 346, simulator 106 may go to the next tick.

At block 348, simulator 106 may determine whether the particular handler is in a join position. In some examples, being in a join position may refer to the position in which the particular handler is configured to perform a joining process, which may involve remaining stationary or moving to join the one or more parts engaged by the particular handler with the sub-assembly. Simulator 106 may proceed to block 350 if it is determined that the particular handler is not in a join position. Simulator 106 may proceed to block 356 if it is determined that the particular handler is in a join position. At block 350, simulator 106 may determine whether the particular handler can get in a join position. Simulator 106 may proceed to block 352 if it is determined that the particular can get into a join position. At block 352, simulator 106 may cause the particular handler to move to or otherwise enter the join position in the simulation. Simulator 106 may proceed to block 354 from block 352. Simulator 106 may proceed block 354 if it is determined that the particular handler cannot get into a join position. At block 354, simulator 106 may go to the next tick.

At block 356, simulator 106 may determine whether the position is confirmed. Simulator 106 may proceed to block 358 if it is determined that the position is not confirmed. Simulator 106 may proceed to block 364 if it is determined that the position is confirmed. At block 358, simulator 106 may determine whether a metrology system is available for the particular handler. Simulator 106 may proceed to block 360 if it is determined that a metrology system is available. At block 360, simulator 106 may simulate a measurement by the metrology system in the simulation and to correct the position of the particular handler based on the simulated measurement. Simulator 106 may proceed to block 362 from block 360. Simulator 106 may proceed block 362 if it is determined that a metrology system is unavailable. At block 362, simulator 106 may go to the next tick.

At block 364, simulator 106 may determine whether the sub-assembly and/or the one or more parts engaged by the particular handler needs retention, e.g., if the handler needs to hold the part still while a retaining adhesive is quick-cured. Simulator 106 may proceed to block 366 if it is determined that the sub-assembly and/or the one or more parts engaged by the particular handler needs retention for assembling the one or more parts engaged by the particular handler in accordance with the plan determined in block 336. Simulator 106 may proceed to block 372 if it is determined that the sub-assembly and/or the one or more parts engaged by the particular handler does not need retention for assembling the one or more parts engaged by the particular handler in accordance with the plan determined in block 336. At block 366, simulator 106 may determine whether a retention robot is available. A retention robot may include, for example, a robot that applies a quick-cure adhesive and/or cures the quick-cure adhesive to retain the joined parts. In some examples, a retention robot may be a robot configured to apply retention to the one or more parts engaged by the particular handler and/or the sub-assembly. Simulator 106 may proceed to block 368 if it is determined that a retention robot is available. In some embodiments, at block 366 simulator 106 may determine if a retention robot needs to equip an end effector to execute retention of the parts, in which case the simulator may cause the retention robot to equip the appropriate end effector. At block 368, simulator 106 may cause the retention robot to apply retention in the simulation, and then simulator 106 may proceed to block 370. Simulator 106 may proceed to block 370 if it is determined that a retention robot is not available at block 366. At block 370, simulator 106 may go to the next tick.

At block 372, simulator 106 may cause the particular handler to disengage the one or more engaged parts after the one or more parts are joined with the subassembly engaged by the keystone or other handler in of the simulation in accordance with the plan determined in block 336. Simulator 106 may proceed to block 374 from block 372. At block 374, simulator 106 may go to the next tick.

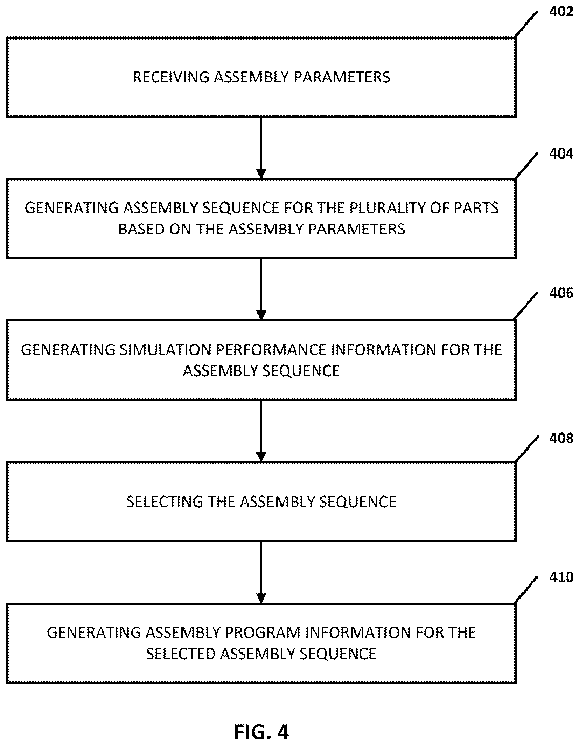

FIG. 4 illustrates an example method in accordance with the techniques disclosed herein. The method may be performed by a processing system as described herein, such as assembly system 100.

At block 402, the method may include receiving assembly parameters. As described above, the assembly parameters may include part-specific information relating to a plurality of parts and robot-specific information relating to multiple robots, e.g., part handlers, AGVs, adhesive applicators, retention robots, etc. At block 404, the method may include generating a first assembly sequence for the plurality of parts based on the assembly parameters. The first assembly sequence may include a first order in which the plurality of parts is to be joined to form an assembly. The first assembly sequence may also include, for example, resource allocation and task schedule information (e.g., robot 1 is scheduled to pick part X from part table T at time t1, robot 2 is scheduled to move its arm from location A to location B at time t2, etc.). At block 406, the method may include generating first simulation performance information for the first assembly sequence. The first simulation performance information may be associated with a robotic cell configuration that includes a plurality of robots. The first simulation performance information may include first robot utilization information and at least one of: first cycle time information corresponding to the plurality of robots or first assembly accuracy information corresponding to the assembly. At block 408, the method may include selecting the first assembly sequence. Selecting the first assembly sequence may be based on the first simulation performance information (which may include, for example, a first score of the first assembly sequence) corresponding to the first assembly sequence. At block 410, the method may include generating assembly program information for the selected first assembly sequence, which characterizes an assembly of the selected first assembly sequence in the corresponding robotic cell. In various embodiments, the assembly program information may include, for example, data that can be imported into a robotic cell program, such as PLC of the robotic cell, to control the robots in the cell to assemble the parts according to the selected first assembly sequence. In various embodiments, the assembly program information may include, for example, executable code downloadable to a controller of the robotic cell to control the robots in the cell to assemble the parts according to the selected first assembly sequence. Generally speaking, the assembly program information may include any data, code, etc., that can be used by the robotic cell to assemble the parts according to the selected first assembly sequence.

Example Implementation: In some examples, a user of assembly system 100 may create a new assembly sequence simulation by selecting, using one or more input devices 140, a robot cell layout and uploading the parts to assembly. This may include building the joint connectivity matrix, and sub-assembly tree grouping for the parts. The user may adjust any robotic timing parameters used in the assembly sequence simulation, and optionally can begin seeding the tables with parts as an initial first guess. To start running the optimizer (e.g., the assembly sequence planner 102), the user sets some optimizer specific parameters and submits the job. As the optimizer finds new candidate solutions based on fitness score, the results may be stored in the database record for the simulation and be displayed for analysis. The user can analyze one or more candidates generated by the optimizer, such as all of the candidates or one or more selected candidates.

Example Optimizer Parallelization: The optimization strategy may include running the sequence simulation for a plurality of independent candidate table assignments. This can be exploited by running the sequence simulation for each candidate, such as in parallel. A master-slave parallelization architecture may be utilized. The master node may run the optimizer and create all the candidates. It may then dispatch (N / P) candidates to each slave node, where N is the number of current candidates and P is the number of slave nodes. The slave nodes may run the sequence simulator for each candidate, collect the results including the fitness score, and return the results to the master node. After all slave nodes have finished and reported back the results, the master may use all the results to determine the next set of candidates. This is an example of an iterative process which may continue until termination criteria is satisfied.

The various techniques described herein may be performed by any suitable means capable of performing the operations, such as various hardware and/or software component(s). A hardware component may include circuitry configured to perform one or more techniques described herein.

The methods disclosed herein comprise one or more steps or actions for achieving the described method. The method steps and/or actions may be interchanged with one another without departing from the scope of the claims. In other words, unless a specific order of steps or actions is explicitly specified as being required, the order and/or use of specific steps and/or actions may be modified without departing from the scope of the claims.

Various aspects of systems, apparatuses, computer program products, and methods are described more fully with reference to the accompanying drawings. This disclosure may, however, be embodied in many different forms and should not be construed as limited to any specific structure or function presented throughout this disclosure. Rather, these aspects are provided so that this disclosure will be thorough and complete, and will fully convey the scope of this disclosure to those skilled in the art. Based on the teachings herein, one skilled in the art should appreciate that the scope of this disclosure is intended to cover any aspect and any combination of aspects of the systems, apparatuses, computer program products, and methods disclosed herein. In addition, the scope of the disclosure is not limited to the structure or functionality disclosed herein. Any aspect disclosed herein may be embodied by one or more elements of a claim.

Although particular aspects are described herein, many variations and permutations of these aspects fall within the scope of this disclosure. Although some potential benefits and advantages of aspects of this disclosure may be mentioned, the scope of this disclosure is not limited to particular benefits, advantages, uses, or objectives. Rather, aspects of this disclosure are intended to be broadly applicable to any system, apparatus, computer program product, and method that may employ one or more aspects of this disclosure.

Several aspects are disclosed herein and are described and illustrated by various systems, blocks, components, functions, processes, algorithms, etc. (collectively referred to as "components"). For example, each block in FIG. 1 may constitute a component. Components of this disclosure may be implemented using or otherwise include hardware, software, or any combination thereof configured to perform one or more aspects described with respect to the component. Whether such components are implemented as hardware or software may depend upon the particular application and design constraints imposed on the overall system. Components may be separate components or sub-components of a single component. By way of example, a component, any portion of a component, or any combination of components may be implemented as a "processing system" that includes one or more processors (which may also be referred to as processing units). Examples of processors may include microprocessors, microcontrollers, graphics processing units (GPUs), central processing units (CPUs), application processors, digital signal processors (DSPs), reduced instruction set computing (RISC) processors, systems on a chip (SoC), baseband processors, field programmable gate arrays (FPGAs), programmable logic devices (PLDs), state machines, programmable logic controllers (PLCs), gated logic, discrete hardware circuits, and other suitable hardware, configured to perform the various functionality described throughout this disclosure. The one or more processors of a processing system may be communicatively coupled in accordance with the techniques described herein. Any functional aspect disclosed herein may be performed by one or more components disclosed herein. The functionality performed by one or more components may be combined into a single component. For example, assembly sequence planner 102 and memory 120 may be implemented in a single processor or multiple processing systems. As another example, various aspects of assembly sequence planner 102 and memory 120 may be spread across multiple communicatively coupled processing systems, where each processing system may include one or more processors.

One or more processors, such as one or more processors of a processing system, may be configured to execute software stored on one or more memories communicatively coupled with the one or more processors. As an example, a processor may access software stored on a memory and execute the software accessed from the memory to perform one or more techniques described herein. Software may refer to instructions, code, etc.

Functionality described herein may be embodied or encoded as hardware, software, or any combination thereof. For example, if implemented in software, a function may be stored on or encoded as one or more instructions or code on a computer-readable medium. Computer-readable media includes computer storage media. Storage media may be any available media/memory that can be accessed by processor, such as random-access memory (RAM), read-only memory (ROM), electrically erasable programmable ROM (EEPROM), optical disk storage, magnetic disk storage, other magnetic storage devices, any other medium that may be used to store software, and any combination thereof. Computer-reasonable media may be non-transitory computer readable media.

Any component herein may be configured to communicate with one or more other components. Communication may include the transmission and/or reception of information. The information may be carried in one or more messages. As an example, a first component in communication with a second component may be described as being communicatively coupled to or otherwise with the second component. For example, assembly sequence planner 102 may be communicatively coupled with one or more components of robotic cell 130. As another example, assembly sequence planner 102 may be communicatively coupled with memory 120. As another example, one or more components of assembly sequence planner 102 may be communicatively coupled with one or more other components of assembly sequence planner 102. As another example, one or more components of robotic cell 130 may be communicatively coupled with one or more other components of robotic cell 130. As another example, any component described herein configured to perform one or more techniques of this disclosure may be communicatively coupled to one or more other components configured to perform one or more techniques of this disclosure. In some examples, when communicatively coupled, two components may be actively transmitting or receiving information, or may be configured to transmit or receive information. If not communicatively coupled, any two components may be configured to communicatively couple with each other, such as in accordance with one or more communication protocols compliant with one or more communication standards. Reference to "any two components" does not mean that only two devices may be configured to communicatively couple with each other; rather, any two devices is inclusive of more than two devices. For example, a first component may communicatively couple with a second component and the first component may communicatively couple with a third component.

In some examples, the term "communicatively coupled" may refer to a communication connection, which may be direct or indirect. A communication connection may be wired, wireless, or a combination thereof. A wired connection may refer to a conductive path, a trace, or a physical medium (excluding wireless physical mediums) over which information may be communicated. A conductive path may refer to any conductor of any length, such as a conductive pad, a conductive via, a conductive plane, a conductive trace, or any conductive medium. A direct communication connection may refer to a connection in which no intermediary component resides between the two communicatively coupled components. An indirect communication connection may refer to a connection in which at least one intermediary component resides between the two communicatively coupled components. Two components that are communicatively coupled may communicate with each other over one or more different types of networks (e.g., a wireless network and/or a wired network) in accordance with one or more communication protocols. In some examples, a communication connection may enable the transmission and/or receipt of information. For example, a first component communicatively coupled to a second component may be configured to transmit information to the second component and/or receive information from the second component in accordance with the techniques of this disclosure. Similarly, the second component in this example may be configured to transmit information to the first component and/or receive information from the first component in accordance with the techniques of this disclosure. The term "communicatively coupled" may refer to a temporary, intermittent, or permanent communication connection.

As described herein, a processing system may refer to any combination of any number (one or more more) of components configured to perform one or more techniques described herein. A processing system may include one or more devices on which one or more components of the processing system reside, such as a server, base station, user equipment, client device, station, access point, a computer, an end product, apparatus, smart phone, or system configured to perform one or more techniques described herein.

The claims are not limited to the precise configuration and components illustrated herein. Various modifications, changes and variations may be made in the arrangement, operation and details of the methods and apparatus described above without departing from the scope of the claims. Combinations such as "at least one of A, B, or C"; "one or more of A, B, or C"; "at least one of A, B, and C"; "one or more of A, B, and C"; and "A, B, C, or any combination thereof" include any combination of A, B, and/or C, and may include multiples of A, multiples of B, or multiples of C. Specifically, combinations such as "at least one of A, B, or C"; "one or more of A, B, or C"; "at least one of A, B, and C"; "one or more of A, B, and C"; and "A, B, C, or any combination thereof" may be A only, B only, C only, A and B, A and C, B and C, or A and B and C, where any such combinations may contain one or more member or members of A, B, or C. All structural and functional equivalents to the various aspects described throughout this disclosure that are known or later come to be known to those of ordinary skill in the art are expressly incorporated herein by reference and are intended to be encompassed by the claims.

While the foregoing is directed to aspects of the present disclosure, other and further aspects of the disclosure may be devised within the scope of the appended claims, which define the invention.

## Claims

1. A system comprising:
a memory; and
a processing system communicatively coupled to the memory, wherein the processing system is configured to:
receive assembly parameters from the memory, wherein the assembly parameters include part information relating to a plurality of parts, wherein the part information includes geometry information for each part of the plurality of parts, wherein the geometry information includes three-dimensional information regarding each part of the plurality of parts;
apply an algorithm to the assembly parameters to generate one or more assembly sequences for the plurality of parts, wherein each of the one or more assembly sequences includes an order in which the plurality of parts is to be joined to form an assembly;
perform a simulation on the one or more assembly sequences to generate simulation performance information for each of the one or more simulated assembly sequences, wherein the simulation performance information is associated with a robotic cell configuration that includes a plurality of robots, and wherein the simulation performance information includes robot utilization information and assembly accuracy information corresponding to the assembly, wherein the assembly accuracy information includes a dimensional accuracy of the final assembly for each of the one or more simulated assembly sequences;
select a first assembly sequence from the one or more assembly sequences based on the simulation performance information corresponding to the first assembly sequence; and
generate assembly program information for the selected first assembly sequence, wherein the assembly program information characterizes an assembly of the selected first assembly sequence in a corresponding robotic cell, wherein the assembly program information includes data or code for the robotic cell to assemble the plurality of parts according to the selected first assembly sequence.

2. The system of claim 1, wherein the algorithm includes at least a genetic algorithm, a mixed integer linear algorithm, or a satisfiability modulo theories algorithm.

3. The system of claim 1, wherein to generate the one or more assembly sequences, the processing system is configured to assign location information to each part of the plurality of parts.

4. The system of claim 3, wherein the location information for each part of the plurality of parts includes a respective part delivery structure identifier corresponding to a respective part delivery structure associated with the robotic cell configuration on which the respective part is to be positioned before assembly.

5. The system of claim 4, wherein the location information for each part of the plurality of parts includes respective part delivery structure location information indicative of where the respective part is to be positioned on the respective part delivery structure before assembly.

6. The system of claim 1, wherein the geometry information for each part includes joint information or robot engagement feature information.

7. The system of claim 1, wherein the geometry information is derived from a three-dimensional model defined in a three-dimensional rendering program file.

8. The system of claim 1, wherein the robot utilization information identifies how many of the robots among the plurality of robots of the robotic cell configuration are utilized by a corresponding assembly sequence, and wherein the assembly accuracy information identifies an assembly accuracy corresponding to the assembly for the corresponding assembly sequence.

9. The system of claim 1, wherein the simulation is based on the robotic cell configuration.

10. The system of claim 1, further comprising:
a computer-executable program configured to import the assembly program information and to control a robotic cell to assemble the plurality of parts based on the assembly program information.

11. The system of claim 1, wherein the processing system is configured to:
determine a score for each of the one or more assembly sequences, and selecting the first assembly sequence includes comparing the scores of the one or more assembly sequences.

12. The system of claim 11, wherein each of the scores are determined based on respective simulation performance information associated with the robotic cell configuration generated for each respective assembly sequence.

13. The system of claim 11, wherein the order of at least one of the assembly sequences is different from the order of one or more of the other assembly sequences.

14. The system of claim 11, wherein comparing the scores includes determining whether at least one of the scores satisfies at least one criterion relative to one or more of the other scores.

15. The system of claim 14, wherein the at least one criterion includes a first score associated with the first assembly sequence being less than a second score associated with a second assembly sequence of the one or more assembly sequences, less than or equal to the second score, equal to the second score, greater than the second score, or greater than or equal to the second score.

16. The system of claim 10, wherein the computer-executable program includes a programmable logic controller, PLC.

17. The system of claim 1, wherein generating each of the one or more assembly sequences includes assigning information to each of the plurality of parts.

18. The system of claim 1, wherein the dimensional accuracy includes a maximum acceptable dimensional deviation from nominal dimensions of the assembly.

## Patentansprüche

1. System, das Folgendes umfasst:
einen Speicher;
und ein Verarbeitungssystem, das kommunikativ mit dem Speicher gekoppelt ist, wobei das Verarbeitungssystem dazu ausgelegt ist:
Montageparameter aus dem Speicher zu empfangen, wobei die Montageparameter Teilinformationen in Bezug auf eine Vielzahl von Teilen umfassen, wobei die Teilinformationen geometrische Informationen für jedes Teil der Vielzahl von Teilen umfassen, wobei die geometrischen Informationen dreidimensionale Informationen für jedes Teil der Vielzahl von Teilen umfassen;
einen Algorithmus auf die Montageparameter anzuwenden, um eine oder mehrere Montagesequenzen für die Vielzahl von Teilen zu generieren, wobei jede der einen oder mehreren Montagesequenzen eine Reihenfolge umfasst, in der die Vielzahl von Teilen zusammengebaut werden soll, um eine Montagegruppe zu bilden;
eine Simulation mit der einen oder mehreren Montagesequenzen auszuführen, um Simulationsleistungsinformationen für jede der einen oder mehreren simulierten Montagesequenzen zu generieren, wobei die Simulationsleistungsinformationen einer Roboterzellenkonfiguration zugeordnet werden, die eine Vielzahl von Robotern umfasst, und wobei die Simulationsleistungsinformationen Roboternutzungsinformationen und Montagegenauigkeitsinformationen in Bezug auf die Montagegruppe umfassen, wobei die Montagegenauigkeitsinformationen eine Maßgenauigkeit der Endmontage für jede der einen oder mehreren simulierten Montagesequenzen umfassen;
basierend auf den Simulationsleistungsinformationen, die der ersten Montagesequenz entsprechen, eine erste Montagesequenz aus der einen oder den mehreren Montagesequenzen auszuwählen; und
Montageprogramminformationen für die ausgewählte erste Montagesequenz zu generieren, wobei die Montageprogramminformationen die Montage der ersten ausgewählten Montagesequenz in einer entsprechenden Roboterzelle charakterisieren, wobei die Montageprogramminformationen Daten oder einen Code für die Roboterzelle umfassen, damit diese die Vielzahl von Teilen gemäß der ersten ausgewählten Montagesequenz montiert.

2. System nach Anspruch 1, wobei der Algorithmus zumindest einen genetischen Algorithmus, einen gemischt-ganzzahligen linearen Algorithmus oder einen Algorithmus für Erfüllbarkeits-Modulo-Theorien umfasst.

3. System nach Anspruch 1, wobei das Verarbeitungssystem zur Generierung der einen oder mehreren Montagesequenzen dazu ausgelegt ist, jedem Teil der Vielzahl von Teilen Positionsinformationen zuzuweisen.

4. System nach Anspruch 3, wobei die Positionsinformationen für jedes Teil der Vielzahl von Teilen einen entsprechenden Teilbereitstellungsstruktur-Identifikator umfassen, der einer entsprechenden Teilbereitstellungsstruktur entspricht, die der Roboterzellenkonfiguration zugeordnet ist, auf welcher das jeweilige Teil vor der Montage zu positionieren ist.

5. System nach Anspruch 4, wobei die Positionsinformationen für jedes Teil der Vielzahl von Teilen entsprechende Teilbereitstellungsstruktur-Positionsinformationen umfassen, die angeben, wo das entsprechende Teil vor der Montage auf der entsprechenden Teilbereitstellungsstruktur zu positionieren ist.

6. System nach Anspruch 1, wobei die geometrischen Informationen für jedes Teil Verbindungsinformationen oder Robotereingriffsmerkmalinformationen umfassen.

7. System nach Anspruch 1, wobei die geometrischen Informationen von einem dreidimensionalen Modell stammen, das in einer Programmdatei zur dreidimensionalen Bildsynthese definiert ist.

8. System nach Anspruch 1, wobei die Roboternutzungsinformationen identifizieren, wie viele der Roboter aus der Vielzahl von Robotern der Roboterzellenkonfiguration durch eine entsprechende Montagesequenz verwendet werden, und wobei die Montagegenauigkeitsinformationen eine Montagegenauigkeit identifizieren, die der Montage für die entsprechende Montagesequenz entspricht.

9. System nach Anspruch 1, wobei die Simulation auf der Roboterzellenkonfiguration basiert.

10. System nach Anspruch 1, das weiters Folgendes umfasst:
ein durch einen Computer ausführbares Programm, das dazu ausgelegt ist, die Montageprogramminformationen zu importieren und eine Roboterzelle so zu steuern, dass sie die Vielzahl von Teilen basierend auf den Montageprogramminformationen montiert.

11. System nach Anspruch 1, wobei das Verarbeitungssystem dazu ausgelegt ist:
einen Wert für jede der einen oder mehreren Montagesequenzen zu bestimmen, und wobei das Auswählen der ersten Montagesequenz das Vergleichen der einen oder mehreren Montagesequenzen umfasst.

12. System nach Anspruch 11, wobei jeder der Werte basieren auf entsprechenden Simulationsleistungsinformationen bestimmt wird, die der Roboterzellenkonfiguration zugeordnet sind, die für jede entsprechende Montagesequenz generiert wurde.

13. System nach Anspruch 11, wobei sich die Reihenfolge der zumindest einen der Montagesequenzen von der Reihenfolge einer oder mehrerer der anderen Montagesequenzen unterscheidet.

14. System nach Anspruch 11, wobei das Vergleichen der Werte das Bestimmen umfasst, ob zumindest einer der Werte zumindest ein Kriterium in Bezug auf einen oder mehrere der anderen Werte erfüllt.

15. System nach Anspruch 14, wobei das zumindest eine Kriterium einen ersten, der ersten Montagesequenz zugeordneten Wert umfasst, der niedriger als ein einer zweiten Montagesequenz der einen oder mehreren Montagesequenzen zugeordneter Wert, niedriger als oder gleich wie der zweite Wert, gleich wie der zweite Wert, höher als der zweite Wert oder höher als oder gleich wie der zweite Wert ist.

16. System nach Anspruch 10, wobei das durch einen Computer ausführbare Programm eine speicherprogrammierbare Steuerung, SPS, umfasst.

17. System nach Anspruch 1, wobei das Generieren jeder der einen oder mehreren Montagesequenzen das Zuweisen von Informationen zu jedem der Vielzahl von Teilen umfasst.

18. System nach Anspruch 1, wobei die Maßgenauigkeit eine maximale zulässige Maßabweichung von Nennmaßen der Montagegruppe umfasst.

## Revendications

1. Système, comprenant :
une mémoire ; et
un système de traitement couplé en communication à la mémoire, dans lequel le système de traitement est configuré pour :
recevoir des paramètres d'assemblage à partir de la mémoire, dans lequel les paramètres d'assemblage incluent des informations de pièce relatives à une pluralité de pièces, dans lequel les informations de pièce incluent des informations de géométrie pour chaque pièce de la pluralité de pièces, dans lequel les informations de géométrie incluent des informations tridimensionnelles concernant chaque pièce de la pluralité de pièces ;
appliquer un algorithme aux paramètres d'assemblage pour générer une ou plusieurs séquences d'assemblage pour la pluralité de pièces, dans lequel chacune des une ou plusieurs séquences d'assemblage inclut un ordre dans lequel la pluralité de pièces doit être jointe pour former un assemblage ;
effectuer une simulation sur les une ou plusieurs séquences d'assemblage pour générer des informations de performance de simulation pour chacune des une ou plusieurs séquences d'assemblage simulées, dans lequel les informations de performance de simulation sont associées à une configuration de cellule robotique qui inclut une pluralité de robots, et dans lequel les informations de performance de simulation incluent des informations d'utilisation de robot et des informations de précision d'assemblage correspondant à l'assemblage, dans lequel les informations de précision d'assemblage incluent une précision dimensionnelle de l'assemblage final pour chacune des une ou plusieurs séquences d'assemblage simulées ;
sélectionner une première séquence d'assemblage parmi les une ou plusieurs séquences d'assemblage sur la base des informations de performance de simulation correspondant à la première séquence d'assemblage ; et
générer des informations de programme d'assemblage pour la première séquence d'assemblage sélectionnée, dans lequel les informations de programme d'assemblage caractérisent un assemblage de la première séquence d'assemblage sélectionnée dans une cellule robotique correspondante, dans lequel les informations de programme d'assemblage incluent des données ou un code pour la cellule robotique pour assembler la pluralité de pièces selon la première séquence d'assemblage sélectionnée.

2. Système selon la revendication 1, dans lequel l'algorithme inclut au moins un algorithme génétique, un algorithme linéaire en nombres entiers mixtes, ou un algorithme de satisfaisabilité modulo des théories.

3. Système selon la revendication 1, dans lequel pour générer les une ou plusieurs séquences d'assemblage, le système de traitement est configuré pour attribuer des informations de localisation à chaque pièce de la pluralité de pièces.

4. Système selon la revendication 3, dans lequel les informations de localisation pour chaque pièces de la pluralité de pièces incluent un identifiant de structure de distribution de pièce respective correspondant à une structure de distribution de pièce respective associée à la configuration de cellule robotique sur laquelle la pièce respective doit être positionnée avant l'assemblage.

5. Système selon la revendication 4, dans lequel les informations de localisation pour chaque pièce de la pluralité de pièces incluent des informations de localisation de structure de distribution de pièce respectives indicatives de l'endroit où la pièce respective doit être positionnée sur la structure de distribution de pièce respective avant l'assemblage.

6. Système selon la revendication 1, dans lequel les informations de géométrie pour chaque pièce incluent des informations de joint ou des informations de caractéristique de mise en prise de robot.

7. Système selon la revendication 1, dans lequel les informations de géométrie sont dérivées d'un modèle tridimensionnel défini dans un fichier de programme de rendu tridimensionnel.

8. Système selon la revendication 1, dans lequel les informations d'utilisation de robot identifient combien de robots parmi la pluralité de robots de la configuration de cellule robotique sont utilisés par une séquence d'assemblage correspondante, et dans lequel les informations de précision d'assemblage identifient une précision d'assemblage correspondant à l'assemblage pour la séquence d'assemblage correspondante.

9. Système selon la revendication 1, dans lequel la simulation est basée sur la configuration de cellule robotique.

10. Système selon la revendication 1, comprenant en outre :
un programme exécutable par ordinateur configuré pour importer les informations de programme d'assemblage et pour commander une cellule robotique pour assembler la pluralité de pièces sur la base des informations de programme d'assemblage.

11. Système selon la revendication 1, dans lequel le système de traitement est configuré pour :
déterminer un score pour chacune des une ou plusieurs séquences d'assemblage, et la sélection de la première séquence d'assemblage inclut une comparaison des scores des une ou plusieurs séquences d'assemblage.

12. Système selon la revendication 11, dans lequel chacun des scores est déterminé sur la base d'informations de performance de simulation respectives associées à la configuration de cellule robotique générée pour chaque séquence d'assemblage respective.

13. Système selon la revendication 11, dans lequel l'ordre d'au moins une des séquences d'assemblage est différent de l'ordre d'une ou plusieurs des autres séquences d'assemblage.

14. Système selon la revendication 11, dans lequel la comparaison des scores inclut une détermination qu'au moins un des scores satisfait ou non au moins un critère par rapport à un ou plusieurs des autres scores.

15. Système selon la revendication 14, dans lequel le au moins un critère inclut un premier score associé à la première séquence d'assemblage étant inférieur à un second score associé à une seconde séquence d'assemblage des une ou plusieurs séquences d'assemblage, inférieur ou égal au second score, égal au second score, supérieur au second score, ou supérieur ou égal au second score.

16. Système selon la revendication 10, dans lequel le programme exécutable par ordinateur inclut un dispositif de commande logique programmable, PLC.

17. Système selon la revendication 1, dans lequel la génération de chacune des une ou plusieurs séquences d'assemblage inclut une attribution d'informations à chacune de la pluralité de pièces.

18. Système selon la revendication 1, dans lequel la précision dimensionnelle inclut un écart dimensionnel maximal acceptable par rapport aux dimensions nominales de l'assemblage.
